# FASCICULE DE BREVET EUROPEEN

(11) **EP 3 468 840 B1**
(45) Date de publication et mention de la délivrance du brevet: **30.03.2022**
(21) Numéro de dépôt: 17735192.1
(22) Date de dépôt: 08.06.2017
(51) Int. Cl.: B60R 13/02, D04B 21/12

(54) **GARNITURE DE PAVILLON DE VÉHICULE AUTOMOBILE DONNANT UNE IMPRESSION DE CIEL ÉTOILÉ**
FAHRZEUG-DACHHIMMEL, DIE DEN EINDRUCK EINES STERNENHIMMELS GEBEN
VEHICLE HEADLINER PANEL GIVING THE IMPRESSION OF A STARRY SKY

(30) Priorité: 13.06.2016 FR 1655409
(43) Date de publication de la demande: 17.04.2019
(73) Titulaire: PSA Automobiles SA, 78300 Poissy (FR)
(72) Inventeur: SURUGUE, Michel, 91190 Gif Sur Yvette (FR); GONCALVES, Whilk Marcelino, 75013 Paris (FR)
(86) Numéro de dépôt international: PCT/FR2017/051440
(87) Numéro de publication internationale: WO 2017/216449

(56) Documents cités:
- EP-A1- 3 100 912
- WO-A1-2014/029802
- FR-A1- 2 562 301
- US-A- 5 493 081
- US-A1- 2011 293 876

## Description

### Domaine de l'invention

La présente invention concerne d'une manière générale l'équipement intérieur d'un véhicule automobile. Elle vise en particulier une garniture de pavillon d'un tel véhicule.

### Arrière-plan de l'invention

Une garniture de pavillon d'un véhicule automobile est constituée classiquement par un panneau support destiné à être fixé contre le pavillon du véhicule et dont la face tournée vers l'intérieur de l'habitacle est recouverte par une feuille de revêtement textile de finition participant à la décoration de cet habitacle.

Afin de permettre une certaine personnalisation, cette feuille de revêtement peut présenter différentes couleurs ou comporter des motifs réalisés par sérigraphie, par héliographie ou encore par gravure laser.

Malgré tout, l'apparence visuelle de ces garnitures de pavillon demeure peu attrayante pour les utilisateurs, surtout de nuit où ces couleurs et autres motifs sont difficilement discernables.

Pour améliorer le rendu visuel de nuit, il est connu de prévoir sous une feuille de revêtement textile perméable à la lumière, un film flexible conducteur à circuits imprimés portant une pluralité de diodes électroluminescentes (LEDS) traversant la garniture de pavillon et étant réparties de manière irrégulière de sorte à donner l'impression d'un ciel étoilé.

Toutefois, de jour lorsque le dispositif lumineux est éteint, la feuille de revêtement textile présente aux emplacements des LEDS des protubérances qui dénaturent l'apparence visuelle de la garniture de pavillon.

Afin d'améliorer le rendu visuel, la demande internationale de brevet WO 2014/029802 propose une garniture de pavillon comportant :
- un premier panneau support destiné à être fixé contre le pavillon du véhicule ;
- un film électronique flexible à circuits imprimés appliqué contre la face inférieure de ce premier panneau support et portant une pluralité de sources lumineuses ponctuelles telles que des diodes électroluminescentes (LEDS) réparties de manière irrégulière de sorte à donner l'impression d'un ciel étoilé ;
- un deuxième panneau appliqué contre la face inférieure de ce film électronique flexible et présentant une pluralité d'orifices traversants logeant lesdites sources lumineuses ; et
- une feuille de revêtement textile perméable à la lumière et recouvrant la face inférieure du deuxième panneau support.

La présence de ce deuxième panneau donne à la garniture de pavillon un rendu lisse et sans aspérités tandis que la feuille de revêtement textile permet de dissimuler les sources lumineuses de jour lorsque ces dernières sont éteintes tout en laissant passer au moins une partie des rayons lumineux qu'elles émettent lorsqu'elles sont allumées.

Formé généralement d'une plaque rigide obtenue à partir d'un polymère thermoplastique tel que le polyméthacrylate de méthyle (PMMA), ce deuxième panneau réfléchit les ondes acoustiques traversant l'habitacle ce qui entraine une augmentation du niveau de bruit ambiant dans l'habitacle particulièrement désagréable pour les passagers.

En outre, il alourdit sensiblement la garniture de pavillon et ne peut être appliqué que sur une portion relativement plane du pavillon en tôle.

Le document EP3100912 propose une garniture intérieure à éclairage décoratif sous forme de points lumineux bien définis, générés par des sources lumineuses ponctuelles intégrées entre le substrat et le revêtement décoratif, de sorte que ledit revêtement décoratif dissimule les sources lumineuses lorsqu'elles sont éteintes, et de telle sorte qu'elle permet un éclairage d'intensité variable en fonction de l'angle de vision de l'occupant par rapport aux points lumineux, de manière à obtenir un effet scintillant.

### Obiet et résumé de l'invention

L'invention vise donc à proposer une solution palliant au moins partiellement à ces inconvénients.

Elle propose à cet effet, une garniture de pavillon de véhicule automobile comportant :
- un premier panneau support destiné à être fixé contre le pavillon dudit véhicule,
- un film électronique flexible à circuits imprimés appliqué contre la face inférieure dudit premier panneau support et portant une pluralité de sources lumineuses ponctuelles réparties de manière irrégulière de sorte à donner l'impression d'un ciel étoilé,
- un deuxième panneau appliqué contre la face inférieure dudit film électronique flexible et présentant une pluralité d'orifices traversants logeant lesdites sources lumineuses, et
- une feuille de revêtement textile perméable à la lumière et recouvrant la face inférieure dudit deuxième panneau support ;
ladite garniture étant caractérisée en ce que ledit deuxième panneau est constitué par une mousse à cellules ouvertes, et en ce que la ladite feuille de revêtement textile perméable à la lumière (16) est constituée par un tissu à mailles tridimensionnelles réalisé par tissage ou tricotage à partir de fibres polymères d'origine naturelle ou synthétique, ladite feuille de revêtement diffractant la lumière émise par les sources lumineuses ponctuelles.

Le fait d'opter pour une telle mousse permet d'assurer une absorption efficace des ondes acoustiques (et en particulier dans les moyennes et hautes fréquences supérieures à 1000 Hz) et de répondre ainsi aux exigences des passagers concernant le confort sonore à l'intérieur de l'habitacle.

Ce matériau permet également de limiter considérablement l'augmentation de masse générée par la présence de ce deuxième panneau.

En outre, de par sa constitution, ce deuxième panneau présente une certaine souplesse lui permettant de s'adapter à des pavillons de véhicule présentant des profils incurvés.

Selon des caractéristiques préférées de l'invention, prises seules ou en combinaison :
- ladite mousse est obtenue à partir d'un polymère thermoplastique choisi entre le polyéther et le polyuréthanne ;
- que ladite mousse présente une densité comprise entre 20 Kg/m³ et 50 Kg/m³ ;
- ledit deuxième panneau est obtenu par découpe à partir d'une plaque de mousse extrudée ;
- lesdites sources lumineuses sont constituées par des diodes électroluminescentes ;
- lesdits orifices traversants présentent une forme tronconique s'évasant vers le bas depuis la face supérieure dudit deuxième panneau de sorte à épouser les cônes d'émission desdites sources lumineuses ;
- lesdits orifices traversants sont réalisés par ablation de matière via un faisceau laser ;
- ladite feuille de revêtement textile perméable à la lumière est constituée par un tissu à mailles tridimensionnelles réalisé par tissage ou tricotage à partir de fibres polymères d'origine naturelle ou synthétique ;
- ladite feuille de revêtement textile et ledit deuxième panneau présentent des teintes sensiblement identiques ; et/ou
- ledit premier panneau support est formé dans un matériau stratifié constitué de fibres de verre agglomérées.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue de dessous d'un pavillon de véhicule automobile pourvu d'une garniture selon l'invention ; et
- la figure 2 est une vue en coupe de la garniture de pavillon de la figure 1.

### Description détaillée d'un mode préféré de réalisation

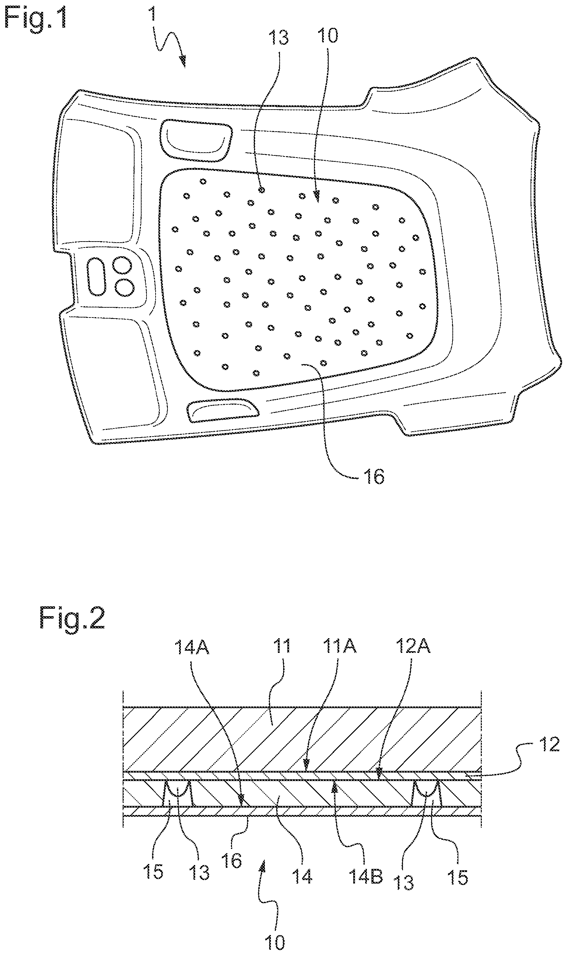

La figure 1 montre le pavillon 1 en tôle d'un véhicule automobile dont la face intérieure supporte une garniture de pavillon 10 selon l'invention.

Comme illustré sur la figure 2, cette garniture de pavillon 10 est constituée par :
- un premier panneau support 11 destiné à être fixé contre le pavillon 1 du véhicule ;
- un film électronique flexible à circuits imprimés 12 appliqué contre la face inférieure 11A de ce premier panneau support 11 et portant une pluralité de sources lumineuses ponctuelles 13 réparties de manière irrégulière de sorte à donner l'impression d'un ciel étoilé ;
- un deuxième panneau 14 appliqué contre la face inférieure 12A de ce film électronique flexible 12 et présentant une pluralité d'orifices traversants 15 logeant les sources lumineuses 13 ; et
- une feuille de revêtement textile 16 perméable à la lumière et recouvrant la face inférieure 14A du deuxième panneau 14.

Le premier panneau support 11 est préférentiellement formé dans un matériau stratifié constitué avantageusement de fibres agglomérées, par exemple de verre.

Le film électronique flexible 12 (ou « flexboard » en anglais) est constituée classiquement d'une feuille isolante souple sur laquelle sont apposées des pistes électroniques conductrices recouvertes d'un matériau isolant.

Les sources lumineuses ponctuelles 13 implantées sur la face inférieure 12A de ce film flexible 12 sont constituées préférentiellement par des diodes électroluminescentes (LEDS) bleues recouvertes d'une fine couche de phosphore de sorte à émettre une lumière blanche dont la teinte peut varier en fonction des proportions de colorant de phosphore utilisées.

On optera ainsi suivant les cas pour un blanc « neutre » se rapprochant de la lumière du jour, pour un blanc « chaud » tendant vers le jaune, ou encore pour un « blanc froid » tendant vers le bleu.

Le deuxième panneau 14 est constitué par une mousse à cellules ouvertes, obtenue de préférence à partir d'un polymère thermoplastique tel que le polyéther ou le polyuréthanne et présentant avantageusement une densité comprise entre 20 Kg/m³ et 50 Kg/m³.

Le fait d'opter pour une telle mousse permet de limiter considérablement l'augmentation de masse générée par la présence de ce deuxième panneau 14 tout en assurant une absorption efficace des ondes acoustiques traversant l'habitacle (et en particulier dans les moyennes et hautes fréquences supérieures à 1000 Hz).

Le panneau 14 peut en outre être obtenu à partir d'une simple plaque de mousse extrudée puis découpée aux dimensions adéquates : la déformabilité de la mousse lui permettant ensuite de venir épouser le profil du complexe formé par le premier panneau support et le film électronique flexible 12. Cette solution a pour avantage d'être particulièrement économique puisqu'elle permet d'éviter l'usage de moules d'injection spécifiques pour la fabrication de ce panneau 14.

Les orifices traversants 15, de préférence réalisés par ablation de matière via un faisceau laser, présentent avantageusement une forme tronconique s'évasant vers le bas depuis la face supérieure 14B de ce panneau 14 de sorte à épouser les cônes d'émission des sources lumineuses 13.

La feuille de revêtement textile 16 perméable à la lumière est avantageusement constituée par un tissu à mailles tridimensionnelles réalisé par tissage ou tricotage à partir de fibres polymères d'origine naturelle telles que la cellulose, ou synthétique telles que le polyester, le polyamide ou le polypropylène.

Ce type de revêtement présente également l'avantage de diffracter la lumière émise par les LEDS de sorte à générer un effet de scintillement des points lumineux offrant à l'utilisateur une impression visuelle se rapprochant d'un véritable ciel étoilé.

De préférence et pour l'obtention d'un rendu visuel optimal, cette feuille de revêtement textile 16 et le deuxième panneau en mousse 14 présentent des teintes sensiblement identiques (ce panneau 14 étant en effet visible par les passagers au travers du revêtement 16).

On va maintenant décrire rapidement un procédé de fabrication possible pour la garniture de pavillon 10.

Le premier panneau support 11 en fibres est tout d'abord thermoformé de manière à adopter le profil courbe du pavillon en tôle 1 du véhicule.

Une couche adhésive est ensuite apposée contre face inférieure 11A de ce premier panneau support 11 pour permettre la mise en place du film électronique flexible à circuits imprimés 12 portant les sources lumineuses ponctuelles 13.

Par ailleurs, le deuxième panneau de mousse 14 et la feuille de revêtement textile 16 sont associés entre eux pour former un complexe souple selon l'une des différentes techniques bien connues de l'homme du métier telles que le flammage ou encore le collage par chauffage d'une colle en poudre préalablement interposée entre les deux.

Les orifices 15 sont ensuite réalisés sur le panneau de mousse 14 par un procédé d'ablation de matière à l'aide d'une tête laser tridimensionnelle permettant de s'adapter à toutes les topologies et les éventuelles différences d'altitudes.

Le complexe souple formé par le deuxième panneau de mousse 14 et la feuille de revêtement textile 16 est enfin appliqué contre l'ensemble constitué par le premier panneau support 11 et le film électronique flexible à circuits imprimés 12, avantageusement par une procédé de thermo-gainage négatif.

Pour ce faire, le complexe souple 14, 16 est chauffé jusqu'à une température comprise entre 150°C et 220°C puis positionné contre une matrice (la feuille de revêtement 16 étant orientée vers cette matrice tandis que le panneau de mousse 14 est tournée à l'opposé de cette dernière).

Le vide est ensuite effectué entre la matrice et le complexe 14, 16 de sorte à provoquer le plaquage de ce dernier qui vient alors épouser la forme de cette matrice.

La face inférieure 12A de l'ensemble 11, 12 contre laquelle le complexe souple 14, 16 doit être appliqué est ensuite recouverte d'une couche de colle activable à chaud tandis que sa face opposée constituée par la face supérieure du panneau 11 est disposée contre un poinçon épousant parfaitement sa forme.

Ce poinçon est ensuite translaté vers la matrice pour réaliser le plaquage du panneau de mousse chaude 16 contre la couche de colle, entrainant la montée en température de cette dernière qui s'active et assure la liaison entre le complexe souple 14, 16 et l'ensemble 11, 12.

Après refroidissement et retrait du poinçon, la garniture de pavillon 10 peut alors être retirée.

D'autres procédés connus peuvent bien entendu être employés pour assurer l'assemblage entre le complexe souple 14, 16 et l'ensemble 11, 12, comme par exemple le thermo-gainage positif ou le surmoulage.

Selon des variantes de réalisation, les sources lumineuses ponctuelles implantées sur le film électronique flexible sont de type différent : ces dernières pouvant par exemple être constituées par des diodes électroluminescentes organiques (OLEDS).

Selon d'autres variantes de réalisation, les orifices 15 sont formés par un procédé différent : ces derniers pouvant par exemple être obtenus par découpe via la pulvérisation d'un jet d'eau à haute pression.

Selon encore d'autres variantes de réalisation, la forme de ces orifices est également différente, par exemple cylindrique. D'une manière générale, cette forme peut être adaptée en fonction du rendu souhaité dans la limite des contraintes techniques des procédés existants.

On notera enfin que la présente invention ne se limite pas aux formes de réalisation décrites et représentées, mais englobe également toutes les variantes d'exécution à la portée de l'homme du métier.

## Revendications

1. Garniture de pavillon de véhicule automobile comportant :
- un premier panneau support (11) destiné à être fixé contre le pavillon (1) dudit véhicule,
- un film électronique flexible à circuits imprimés (12) appliqué contre la face inférieure (11A) dudit premier panneau support (11) et portant une pluralité de sources lumineuses ponctuelles (13) réparties de manière irrégulière de sorte à donner l'impression d'un ciel étoilé,
- un deuxième panneau (14) appliqué contre la face inférieure (12A) dudit film électronique flexible (12) et présentant une pluralité d'orifices traversants (15) logeant lesdites sources lumineuses (13), et
- une feuille de revêtement textile perméable à la lumière (16) et recouvrant la face inférieure dudit deuxième panneau support (14) ; ladite garniture étant **caractérisée en ce que** ledit deuxième panneau (14) est constitué par une mousse à cellules ouvertes, et **en ce que** la ladite feuille de revêtement textile perméable à la lumière (16) est constituée par un tissu à mailles tridimensionnelles réalisé par tissage ou tricotage à partir de fibres polymères d'origine naturelle ou synthétique, ladite feuille de revêtement diffractant la lumière émise par les sources lumineuses ponctuelles (13).

2. Garniture de pavillon selon la revendication 1, **caractérisée en ce que** ladite mousse est obtenue à partir d'un polymère thermoplastique choisi entre le polyéther et le polyuréthanne.

3. Garniture de pavillon selon l'une des revendications précédentes, **caractérisée en ce que** ladite mousse présente une densité comprise entre 20 Kg/m³ et 50 Kg/m³.

4. Garniture de pavillon selon l'une des revendications précédentes, **caractérisée en ce que** ledit deuxième panneau (14) est obtenu par découpe à partir d'une plaque de mousse extrudée.

5. Garniture de pavillon selon l'une des revendications précédentes, **caractérisée en ce que** lesdites sources lumineuses (13) sont constituées par des diodes électroluminescentes.

6. Garniture de pavillon selon l'une des revendications précédentes, **caractérisée en ce que** lesdits orifices traversants (15) présentent une forme tronconique s'évasant vers le bas depuis la face supérieure (14B) dudit deuxième panneau (14) de sorte à épouser les cônes d'émission desdites sources lumineuses (13).

7. Garniture de pavillon selon l'une des revendications précédentes, **caractérisée en ce que** lesdits orifices traversants (15) sont réalisés par ablation de matière via un faisceau laser.

8. Garniture de pavillon selon l'une des revendications précédentes, **caractérisée en ce que** ladite feuille de revêtement textile et ledit deuxième panneau présentent des teintes sensiblement identiques.

9. Garniture de pavillon selon l'une des revendications précédentes, **caractérisée en ce que** ledit premier panneau support (11) est formé dans un matériau stratifié constitué de fibres de verre agglomérées.

## Patentansprüche

1. Fahrzeugdachverkleidung mit:
- eine erste Tragplatte (11), die am Dach (1) des Fahrzeugs befestigt werden soll,
- eine flexible elektronische Folie (12) für gedruckte Schaltungen, die an der Unterseite (11A) der ersten Trägerplatte (11) angebracht ist und eine Vielzahl von Punktlichtquellen (13) trägt, die unregelmäßig verteilt sind, um den Eindruck eines Sternenhimmels zu erwecken;
- eine zweite Platte (14), die gegen die Unterseite (12A) der flexiblen elektronischen Folie (12) gedrückt wird und eine Vielzahl von Durchgangslöchern (15) aufweist, die die Lichtquellen (13) aufnehmen, und
- eine lichtdurchlässige Textilbeschichtungsfolie (16), die die Unterseite der zweiten Trägerplatte (14) bedeckt;
Die Auskleidung ist **dadurch gekennzeichnet, dass** die zweite Platte (14) aus einem offenzelligen Schaum besteht und dass die lichtdurchlässige textile Abdeckfolie (16) aus einem dreidimensionalen Maschengewebe besteht, das durch synthetisches Weben hergestellt ist, wobei die Abdeckfolie das von den Punktlichtquellen (13) emittierte Licht beugt.

2. Dachhimmel nach Anspruch 1, **dadurch gekennzeichnet, dass** der Schaum aus einem thermoplastischen Polymer, ausgewählt aus Polyether und Polyurethan, erhalten wird.

3. Dachhimmel nach einem der vorhergehenden Ansprüche, **dadurch gekennzeichnet, dass** der Schaum eine Dichte zwischen 20 kg/m³ und 50 kg/m³ aufweist.

4. Dachhimmel nach einem der vorhergehenden Ansprüche, **dadurch gekennzeichnet, dass** die zweite Platte (14) durch Schneiden aus einer extrudierten Schaumplatte erhalten wird.

5. Dachhimmel nach einem der vorhergehenden Ansprüche, **dadurch gekennzeichnet, dass** die Lichtquellen (13) durch Leuchtdioden gebildet sind.

6. Dachhimmel nach einem der vorhergehenden Ansprüche, **dadurch gekennzeichnet, dass** die Durchgangslöcher (15) eine kegelstumpfförmige Form aufweisen, die sich von der oberen Fläche (14B) der zweiten Platte (14) nach unten erweitert, um den Emissionskonen der Lichtquellen (13) anzupassen.

7. Dachhimmel nach einem der vorhergehenden Ansprüche, **dadurch gekennzeichnet, dass** die Durchgangslöcher (15) durch Materialabtrag über einen Laserstrahl hergestellt sind.

8. Dachhimmel nach einem der vorhergehenden Ansprüche, **dadurch gekennzeichnet, dass** die textile Abdeckfolie und die zweite Platte im Wesentlichen identische Schattierungen aufweisen.

9. Dachhimmel nach einem der vorhergehenden Ansprüche, **dadurch gekennzeichnet, dass** die erste Trägerplatte (11) aus einem laminierten Material gebildet ist, das aus agglomerierten Glasfasern besteht.

## Claims

1. Automotive vehicle roof lining comprising:
- a first support panel (11) to be fixed against the roof (1) of said vehicle,
- a flexible printed circuit electronic film (12) applied against the underside (11A) of said first support panel (11) and carrying a plurality of point light sources (13) irregularly distributed to give the impression of a starry sky,
- a second panel (14) pressed against the underside (12A) of said flexible electronic film (12) and having a plurality of through-holes (15) accommodating said light sources (13), and
- a light-permeable textile coating sheet (16) covering the underside of the second support panel (14);
the said lining being **characterized in that** said second panel (14) is constituted by an open-cell foam, and **in that** said light-permeable textile covering sheet (16) is constituted by a three-dimensional mesh fabric produced by synthetic weaving, said covering sheet diffracting the light emitted by the point light sources (13).

2. A roof lining according to claim 1, **characterized in that** said foam is obtained from a thermoplastic polymer selected from polyether and polyurethane.

3. A roof lining according to one of the preceding claims, **characterized in that** the said foam has a density of between 20 Kg/m³ and 50 Kg/m³.

4. A roof lining according to one of the preceding claims, **characterized in that** said second panel (14) is obtained by cutting from an extruded foam plate.

5. A roof lining according to one of the preceding claims, **characterized in that** said light sources (13) are constituted by light-emitting diodes.

6. A roof lining according to one of the preceding claims, **characterized in that** said through-holes (15) have a frustoconical shape widening downwards from the upper face (14B) of said second panel (14) so as to match the emission cones of said light sources (13).

7. A roof lining according to one of the preceding claims, **characterized in that** said through-holes (15) are made by material removal via a laser beam.

8. A roof lining according to one of the preceding claims, **characterized in that** said textile covering sheet and said second panel have substantially identical shades.

9. A roof lining according to one of the preceding claims, **characterized in that** said first support panel (11) is formed of a laminated material consisting of agglomerated glass fibers.
